Europäisches Patentamt

(19) European Patent Office

Office européen des brevets

(11) Publication number:

**0 060 821**
**B1**

(12) **EUROPEAN PATENT SPECIFICATION**

(45) Date of publication of patent specification: **08.07.87**

(21) Application number: **82850052.0**

(22) Date of filing: **12.03.82**

(51) Int. Cl.⁴: **B 62 D 21/18, B 62 D 53/02**

(54) **Articulated waist terrain vehicle.**

(30) Priority: **13.03.81 SE 8101626**

(43) Date of publication of application:
**22.09.82 Bulletin 82/38**

(45) Publication of the grant of the patent:
**08.07.87 Bulletin 87/28**

(84) Designated Contracting States:
**AT DE FR GB**

(56) References cited:
**DE-A-2 535 118**
**DE-B-1 216 710**
**FR-A-1 209 973**
**GB-A-1 427 194**
**US-A-4 116 298**

(73) Proprietor: **Stensele Mekaniska Verkstad AB**
**Box 523**
**S-826 01 Söderhamn 1 (SE)**

(72) Inventor: **Hedlund, Bo Paul Sigvald**
**Gräsuddsvägen 27**
**S-826 00 Söderhamn (SE)**
Inventor: **Arnoldsson, Erik**
**Ringvägen 19**
**S-826 00 Söderhamn (SE)**

(74) Representative: **Hopfgarten, Nils et al**
**Bergenstrahle & Lindvall AB Sankt Paulsgatan 1**
**S-116 47 Stockholm (SE)**

Courier Press, Leamington Spa, England.

## Description

The present invention relates to articulated waist terrain vehicles, particularly forest machines. Such vehicles include a chassis with a wheeled forward section carrying the vehicle driving engine and a wheeled rear section, a driver's cab and possibly one or more working implements. Apart from steering the vehicle in a desired direction, waist articulation with its vertical articulating pin also permits manoeuvring the forward and rear sections of the vehicle to obtain maximum stability in different dispositions of the vehicle in the terrain.

In order to take up irregularities in the terrain, the vehicle axles must be able to swing relative each other round a longitudinal, substantially horizontal shaft. In conventional vehicles of this kind, the forward section carries the engine and driver's cab while the rear section carries working implements or load. Since the greatest loading on the ground will be under the working implements or load, the rear section is generally provided with a plurality of wheels arranged as bogies. The forward section or the front axle by itself has a suspension allowing the front and rear axles to swing relative each other. Both kinds of suspension are to be found in the prior art.

When the cab is mounted on the forward section so that it accompanies the movements thereof in the travelling and lateral tipping directions, the driver is subjected to the effects of tipping, and lateral movements are particularly difficult for the driver to withstand. On the other hand, when the rear section is provided with a bogie, it only tips half as much laterally for the same irregularities. A fixed location of the cab relative the rear section has therefore been proposed and even put into effect, the vehicle then being provided with a cradled front axle. As the cab can then be placed at a relatively large distance from the engine it will also be possible to avoid the noise and temperature problems in the cab occurring when it is placed directly adjacent the engine. The advantage of the cab accompanying the forward section in its steering movement, which is advantageous for driving view and safety is, on the other hand, lost when the cab is placed on the rear section.

From US—A—4 116 298 an articulated waist terrain vehicle is known comprising a chassis, a driver's cab and possibly one or more work implements, said chassis comprising a wheeled forward section carrying the vehicle driving engine and a wheeled rear section. The vehicle has an intermediate section mounted between the vehicle forward and the vehicle rear sections and connected to the forward section by means of a substantially horizontal articulation extending in the vehicle travelling direction, and connected to the rear section by means of a substantially vertical articulation, the cab being mounted on the intermediate section to accompany the forward section in the substantially horizontal steering movements thereof. The pivot connections between the intermediate section and forward section define a hinge axis providing relative tilting movement of the axle assembly with respect to the intermediate section which latter carries the cab.

Thus lateral tipping movements are not transferred to the driver's cab and consequently not to the driver therein, when the vehicle is driven in terrain.

US—A—4 116 298 discloses a pendulum axis vehicle, i.e. the wheels are pivotable thus requiring a larger overall width of the vehicle to enable this pivoting movement. Further, the engine and the cab are mounted together in one unit and therefore the above mentioned advantage of screening off vibrations and noise from the engine is not obtained.

The purpose of the present invention is to construct a terrain vehicle having a reduced width and a driver's cab screened off from noise and vibrations from the engine, while retaining the advantages of avoiding that lateral tipping movement are transferred to the drivers' cab and consequently to the driver therein, when the vehicle is driven in terrain, and at the same time providing that the driver's cab accompanies the forward vehicle section in its horizontal steering movements.

This purpose is obtained according to the invention by an articulated waist terrain vehicle with a chassis, a driver's cab and possibly one or more work implements, said chassis comprising a wheeled forward section carrying the vehicle driving engine and a wheeled rear section, the wheels of said forward section being mounted on a fixed shaft, the vehicle driving engine being arranged between the wheels on the fixed shaft of the forward section, said chassis comprising a non-wheeled intermediate section mounted behind said forward section and in front of said rear section, said intermediate section being connected to the forward section by means of a substantially horizontally articulating shaft extending in the vehicle travelling direction between the front portion of said intermediate section and the back portion of said forward section and being connected to the rear section by means of a substantially vertical articulating pin in the back portion of said intermediate section and the front portion of said rear section, said cab being mounted on said intermediate section to be separated from the engine-carrying forward section and yet accompany the forward section in the substantially horizontal steering movements thereof.

By the engine installation according to the invention on a shaft, which is not pivotable or spring suspended, the space between the wheel's can be utilized to a maximum and therefore the width of the vehicle can be reduced, which is an important advantage when the vehicle shall be used as a forest vehicle for thinning forest.

In the vehicle according to the invention the cab carrying intermediate section is separated from the engine carrying forward section. In this way noise and vibrations from the engine is not transmitted to the driver's cab in such an undamped way that occurs in constructions where the engine and the cab are mounted on the same chassis section.

Further, in the vehicle according to the invention transfer is avoided of lateral tipping movements of the forward section to the intermediate section and the driver's cab, which considerably improves the driver's comfort. Further, by connecting the forward and the intermediate section, carrying the driver's cab, by a horizontally articulating shaft the cab will accompany the forward section in its horizontal steering movements which is another important advantage as it facilitates for the driver to look in the driving direction in a comfortable way.

Thus lateral tipping movements of the forward section are not transferred to the driver's cab and at the same time the driver's cab is fixed, non-rotatably in horizontal direction to the forward section as the steering mechanism is provided between the intermediate section and the rear section.

The cab will thus be rigidly connected to the rear section in the tipping direction, the latter section having a bogie for smoothing out tipping movement.

The engine is placed on a fixed forward shaft as mentioned above where the space between the wheels can be utilized to a maximum. A pivoting or swinging shaft namely encroaches on the space, especially in width, which can be utilized for installing the engine.

The horizontal tipping or tilting articulating member is placed behind the engine but in front of the cab, thus screening off vibration, noise and temperature. For placing the cab, the intermediate section is therefore formed between the horizontal articulating member and the vertical articulation so that cab attachments can be expeditiously effected. There is further obtained with this placing the said advantage that the cab accompanies the direction of the forward section during travel.

The intermediate section is suitably made short in relation to the forward and rear sections, seen in the travelling direction of the vehicle. A cab may be rigidly mounted on the intermediate section, but may also be pivotably mounted thereon for movement about a vertical axis, whereby it may possibly be restrainable in desired angular positions.

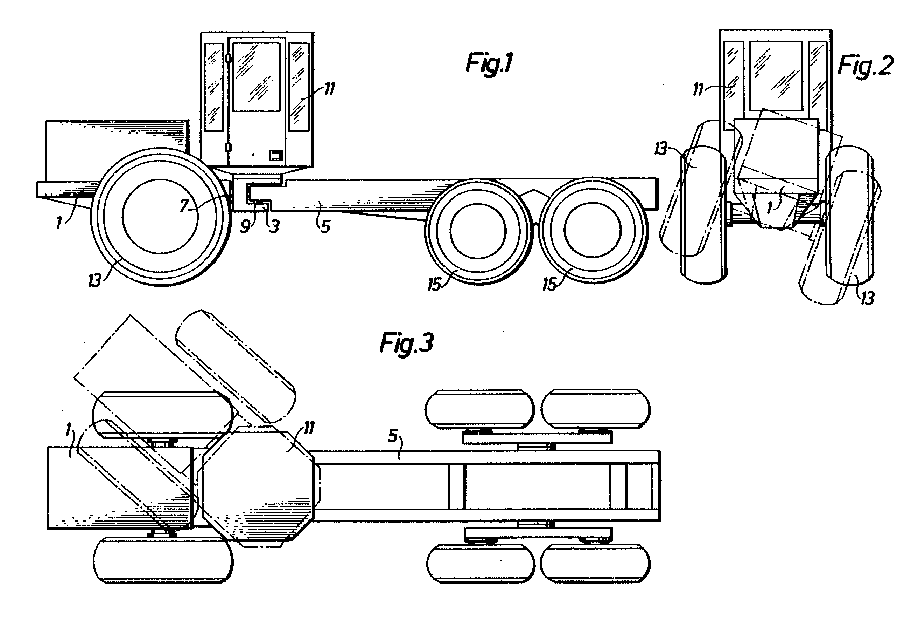

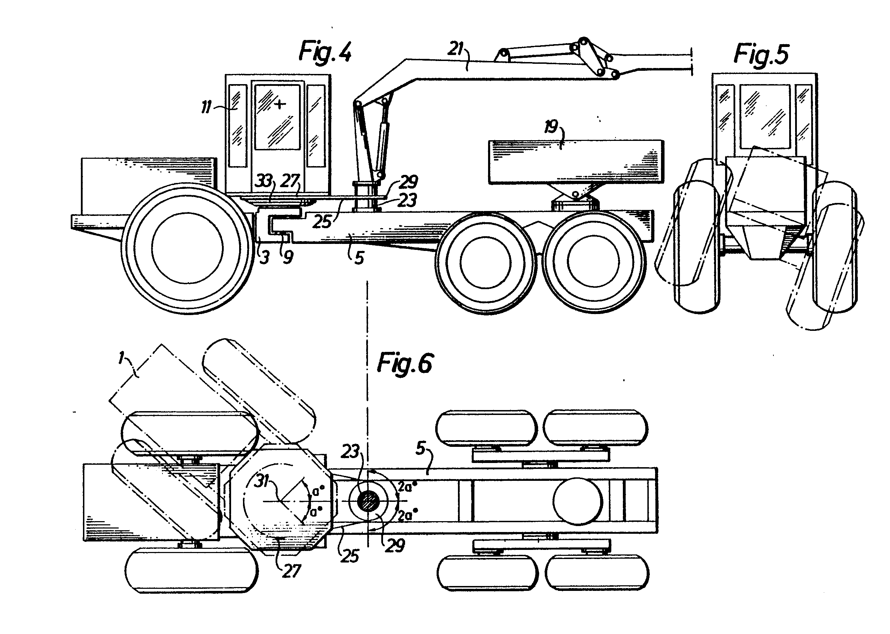

The invention will now be described in detail in the following in conjunction with the appended drawings, on which Figures 1—3 illustrate an embodiment of a vehicle in accordance with the invention, Figure 1 illustrating the vehicle seen from one side, Figure 2 from the front, and Figure 3 from above. Figures 4—6 illustrate in the same way as Figures 1—3 a second embodiment of the vehicle supplemented with a working implement in the form of a knuckled jib crane.

The vehicle according to Figures 1—3 includes a chassis with a forward section 1 carried by the front wheels 13 of the vehicle, a rear section 5 carried by the rear wheels 15 of the vehicle, and an intermediate section 3 articulatedly connected to the forward section about a shaft 7 extending in a vertical central plane through the vehicle in its longitudinal direction and is directed horizontally in the normal disposition of the vehicle. The intermediate section 3 is coupled to the rear section 5 by means of a shaft 9 which extends vertically in the normal disposition of the vehicle and is situated in the above-mentioned vertical central plane through the vehicle. The driver's cab 11 is rigidly mounted on the intermediate section 3.

By the cab 11 being placed on the intermediate section 3, in relation to which the vehicle forward section with carrying wheels 13 can swing arbitrarily about the shaft 7, the cab will not accompany such twisting movements, which can be considerable in very irregular terrain, as illustrated by Figure 2. There is thus achieved considerable increase in driver comfort when the machine is used in terrain.

The shaft 7 does not need to extend entirely horizontally in the normal attitude of the vehicle, but can be somewhat inclined to suit the construction of the vehicle. According to Figures 1—3, the cab 11 is placed essentially above the vertical articulating shaft 9, but such a location is not necessary. For example, the cab can suitably be mounted somewhat behind or even somewhat in front of the pin 9.

The intermediate section 3 is illustrated as a rigid unit, but it is also conceivable to have it composed of two or more mutually connected parts.

A second embodiment of the vehicle in accordance with the invention is illustrated in Figures 4—5, the basic structure of the vehicle being in agreement with that illustrated according to Figures 1—3, but differing in that it has a processing unit, e.g. a trimming unit 19, on the chassis rear section 5 and a knuckle jig crane 21 rotatably mounted on the rear section 5 with the aid of a horizontal bearing 23. The unit 19 and crane 21 are not shown in Figures 5 and 6.

The cab 11 is rotatably mounted on the intermediate section 3 by means of a bearing, e.g. a slewing bearing 33 with a vertical turning axis 31. This is illustrated as coincident with the axis of the vertical pin 9 included in the chassis waist articulation.

The base structure of the cab 11 includes a toothed ring 27. At the same level the mounting 23 of the crane is provided with a toothed ring 29, and a chain 25 is laid round the toothed rings 27 and 29. The latter have a diameter ratio such that when the crane 21 turns an angle β, the cab turns an angle α which can be a predetermined optional function of β. Suitably, α can be about the same or less than β and α is shown to be half of β in the Figures, i.e. when the crane has turned an angle 2α according to Figure 6, the cab has turned an angle α.

The intention with this arrangement is to increase the ability of the driver to view the entire work process from where a tree is collected from the ground until it has been fed into the processing unit 19. The cab can be disengageable from the crane and fixable in an optional angular position.

In Figure 6, the forward section is illustrated by chain-dotted lines to be directed at an angle α from its basic direction illustrated with full lines, since an angular attitude of this kind is usual for increasing the stability of the vehicle during work. The chain-dotted position of the cab accidently happens to coincide with the angular position of the forward section. It may be said that the cab attitude corresponds to what is the case just after the machine has been set up for work.

The actual driving of the crane and cab movements in the horizontal plane has not been shown, but is provided by conventional, suitably hydraulic, power means.

The invention is not limited to the illustrated and described embodiments, since many modifications and variations thereof are possible within the scope of the invention as claimed. It is mentioned here that there is a possibility of mounting the cab on the rear section, above or close to the waist pin, and also making it rotatable in the horizontal plane in relation to the rear section, means being adapted enabling such rotational control of the cab that it accompanies the forward section in the steering movements thereof.

**Claims**

1. An articulated waist terrain vehicle with a chassis, a driver's cab (11) and possibly one or more work implements (21), said chassis comprising a wheels forward section (1) carrying the vehicle driving engine and a wheeled rear section (5), the wheels (13) of said forward section (1) being mounted on a fixed shaft, the vehicle driving engine being arranged between the wheels on the fixed shaft of the forward section, said chassis comprising a non-wheeled intermediate section (3) mounted behind said forward section (1) and in front of said rear section (5), said intermediate section being connected to the forward section by means of a substantially horizontally articulating shaft (7) extending in the vehicle travelling direction between the front portion of said intermediate section and the back portion of said forward section and being connected to the rear section by means of a substantially vertical articulating pin (9) in the back portion of said intermediate section and the front portion of said rear section, said cab (11) being mounted on said intermediate section to be separated from the engine-carrying forward section and yet accompany the forward section in the substantially horizontal steering movements thereof.

2. Vehicle as claimed in claim 1, wherein the intermediate section (3) is short, seen in the vehicle travelling direction, in comparison with the forward and rear sections (1, 5).

3. Vehicle as claimed in any of claims 1 or 2, comprising a crane (21), boom or the like work implement for handling a load, rotatably mounted about a vertical axis on said rear section (5).

**Patentansprüche**

1. Geländegängiges Gelenkfahrzeug mit einem Chassis, einer Fahrerkabine (11) und gegebenenfalls einem oder mehreren Arbeitsgeräten (21), wobei das Chassis einen mit Rädern ausgerüsteten vorderen Teil (1), der den Antriebsmotor des Fahrzeugs trägt, und einen mit Rädern ausgerüsteten hinteren Teil (5) aufweist, wobei die Räder (13) dieses vorderen Teils (1) auf einer unbeweglichen Achse befestigt sind, wobei der Antriebsmotor des Fahrzeugs zwischehn den Rädern auf der unbeweglichen Achse des vorderen Teils angeordnet ist, wobei dieses Chassis einen nicht mit Rädern ausgerüsteten Mittelteil (3) aufweist, der hinter diesem vorderen Teil (1) und vor diesem hinteren Teil (5) angebracht ist, wobei dieser Mittelteil mit dem vorderen Teil mittels einer im wesentlichen horizontalen Gelenkachse (7) verbunden ist, die sich in Fahrtrichtung des Fahrzeugs zwischen dem vorderen Bereich dieses Mittelteils und dem hinteren Bereich dieses vorderen Teils erstreckt, und mit dem hinteren Teil mittels eines im wesentlichen vertikalen Gelenkbolzens (9) im hinteren Bereich des Mittelteils und im vorderen Bereich des hinteren Teils verbunden ist, wobei diese Kabine (11) auf diesem Mittelteil angebracht ist, damit sie vom vorderen Teil, der den Motor trägt, getrennt ist, aber immer noch die im wesentlichen horizontalen Lenkbewegungen des vorderen Teils mitmacht.

2. Fahrzeug nach Anspruch 1, bei dem der Mittelteil (3), in Fahrtrichtung des Fahrzeugs gesehen, kurz ist im Vergleich zu dem vorderen und hinteren Teil (1, 5).

3. Fahrzeug nach einem der Ansprüche 1 oder 2, wobei ein Kran 21, Ausleger oder ähnliches Arbeitsgerät zum Handhaben einer Last auf diese hinteren Teil (5) um eine Vertikalachse drehbar angeordnet ist.

**Revendications**

1. Véhicule toute terrain articulé comprenant un châssis, une cabine de conduite (11) et, le case échéant, un ou plusieurs outils de travail (21), ledit châssis comprenant une partie avant (1) à roues portant le moteur de propulsion du véhicule et une partie arrière (5) à roues, les roues (13) de ladite partie avant (1) étant montées sur un arbre fixe, le moteur de propulsion du véhicule étant agencé entre les roues situées sur l'arbre fixe de la partie avant et ledit châssis comprenant une partie intermédiaire (3) sans roues montée en arrière de ladite partie avant (1) et en avant de ladite partie arrière (5), ladite partie intermédiaire étant reliée à la partie avant au moyen d'un axe d'articulation (7) sensiblement horizontal s'étendant dans la direction de marche du véhicule entre la portion avant de ladite partie intermédiaire et la portion arrière de ladite partie avant et étant reliée à la partie arrière au moyen d'un axe d'articulation (9) sensiblement vertical passant dans la portion arrière de ladite partie intermédiaire et dans la portion avant de ladite partie arrière, ladite cabine (11) étant montée sur ladite partie intermédiaire afin d'être séparée de la partie avant portant le moteur tout en accompagnant la partie avant des ses mouvements sensiblement horizontaux de direction.

2. Véhicule selon la revendication 1, dans lequel la partie intermédiaire (3) est courte, vue dans la direction de marche du véhicule, en comparaison avec les parties avant et arrière (1, 5).

3. Véhicule selon l'une des revendications 1 et 2, comprenant une grue (21), une flèche ou un outil de travail analogue pour la manutention d'une charge, monté de façon à pouvoir tourner autour d'un axe vertical sur ladite partie arrière (5).

Fig.1

Fig.2

Fig.3

Fig.4

Fig.5

Fig.6

0 060 821